# NEW EUROPEAN PATENT SPECIFICATION

(11) **EP 3 106 646 B2**
(45) Date of publication and mention of the opposition decision: **31.07.2024**
(45) Mention of the grant of the patent: 16.12.2020
(21) Application number: 16174862.9
(22) Date of filing: 16.06.2016
(51) Int. Cl.: F02C 7/14, F02K 3/115, F02C 7/18, F01D 25/12, F02C 6/08, B64D 33/10, B64D 29/02, F02C 9/18

(54) **TURBOFAN ENGINE WITH A COOLED COOLING AIR SYSTEM AND A CORRESPONDING METHOD**
GEBLÄSETRIEBWERK MIT EINEM KÜHLLUFTSYSTEM SOWIE EIN DAZUGEHÖRIGES VERFAHREN
MOTEUR À DOUBLE FLUX AVEC UN SYTÈME D'AIR DE REFROIDISSEMENT ET PROCÉDÉ CORRESPONDANT

(30) Priority: 16.06.2015 US 201514740368
(43) Date of publication of application: 21.12.2016
(73) Proprietor: RTX Corporation, Farmington, CT 06032 (US)
(72) Inventor: SCHWARZ, Frederick M., Glastonbury, CT Connecticut 06033 (US); DUESLER, Paul W., Manchester, CT Connecticut 06040 (US)
(74) Representative: Dehns

(56) References cited:
- EP-A1- 2 128 023
- EP-A2- 0 469 825
- US-A1- 2007 245 738
- US-A1- 2007 245 738
- US-A1- 2008 028 763
- US-A1- 2009 031 695
- US-A1- 2009 188 234
- US-A1- 2012 102 915
- US-A1- 2012 159 961

## Description

### TECHNICAL FIELD

The present disclosure relates generally to turbofan engines, and more specifically to a cooled cooling air system for utilization within a turbofan engine.

### BACKGROUND

Gas turbine engines, such as those utilized on commercial aircraft, typically include a compressor section that draws in and compresses air, a combustor section where the compressed air is mixed with a fuel and ignited, and a turbine section across which the combustion gasses from the ignition are expanded. Expansion of the combustion gasses across the turbine section drives rotation of the turbine section, which in turn drives rotation of the compressor section. Each of the compressor section, the combustor section, and the turbine section are contained within an engine core, and are connected by a primary flowpath that flows through each of the sections.

Fore of the compressor section is a fan that drives air through a fan bypass duct surrounding the engine core. As with the compressors, the fan is connected to the turbine section via a drive shaft. In some example engines, the fan is connected through a gear system, and the engine is referred to as a geared turbofan engine. In alternative engines, the fan is connected directly to a turbine in the turbine section via a drive shaft and the engine is referred to as a direct drive engine.

In order to cool some components of the engine, cooling air is provided from a cooling air system directly to the cooled components. In order to provide more efficient cooling, the cooling air in some examples is actively cooled. A system for actively cooling the cooling air is referred to as a cooled cooling air system.

EP 0 469 825 A2 discloses a prior art gas turbine engine. US 2012/0159961 A1 discloses a prior art gas turbine engine heat exchanger. US 2007/0245738 A1 discloses a prior art gas turbine engine with a heat exchanger arrangement according to the preamble of claim 1 and a prior art method according to the preamble of claim 11 EP 2 128 023 A1 discloses a prior art bleed air cooler assembly for a gas turbine engine, corresponding kit and installation method. US 2008/0028763 A1 discloses a prior art thermal management system with thrust recovery for a gas turbine engine fan nacelle assembly.

### SUMMARY OF THE INVENTION

According to a first aspect of the present invention there is provided a gas turbine engine as set forth in claim 1.

In an exemplary embodiment of the above described gas turbine engine, the at least one bifurcation is a lower bifurcation.

In another exemplary embodiment of any of the above described gas turbine engines, the heat exchanger is structurally mounted to the engine core via at least one bracket.

In another exemplary embodiment of any of the above described gas turbine engines, the heat exchanger is an air-air heat exchanger, and a cooling air stream originates in the fan bypass duct.

In another exemplary embodiment of any of the above described gas turbine engines, the cooling air stream exhausts into one of an aft portion of the fan bypass duct and an ambient atmosphere downstream of the fan bypass duct.

In another exemplary embodiment of any of the above described gas turbine engines, the heat exchanger is an orthoganol heat exchanger.

Another exemplary embodiment of any of the above described gas turbine engines further includes a fan fore of the engine core, and wherein the fan is connected to the engine core via a gearing system.

In another exemplary embodiment of any of the above described gas turbine engines the cooled cooling air system includes a second heat exchanger, and wherein the second heat exchanger is at least partially disposed in the bifurcation.

In another exemplary embodiment of any of the above described gas turbine engines the flow regulation feature is an articulating door controllably coupled to an engine controller such that the engine controller is operable to control a flow of air through the cooling air inlet.

In another exemplary embodiment of any of the above described gas turbine engines the cooled cooling air system further includes a cooling air outlet door, the cooling air outlet door including a flow regulation feature.

In another exemplary embodiment of any of the above described gas turbine engines the flow regulation feature is an articulating door, and the articulating door is controllably coupled to an engine controller such that the engine controller is operable to control a flow of air through the cooling air outlet.

According to a further aspect of the present invention, there is provided a method as set forth in claim 11.

In a further example of any of the above exemplary methods includes transferring heat from the bleed air to the fan bypass air in the heat exchanger comprises passing the bleed air through a plurality of pipes in the heat exchanger, and passing the fan bypass air across the pipes in the heat exchanger.

These and other features of the present invention can be best understood from the following specification and drawings, the following of which is a brief description.

### BRIEF DESCRIPTION OF THE DRAWINGS

Figure 1 schematically illustrates an exemplary gas turbine engine.
Figure 2 schematically illustrates a front view of a gas turbine engine.
Figure 3 schematically illustrates a cross section view of a fan nacelle at a bifurcation.
Figure 4 schematically illustrates a cross sectional view of an alternate fan nacelle at a bifurcation.

### DETAILED DESCRIPTION OF AN EMBODIMENT

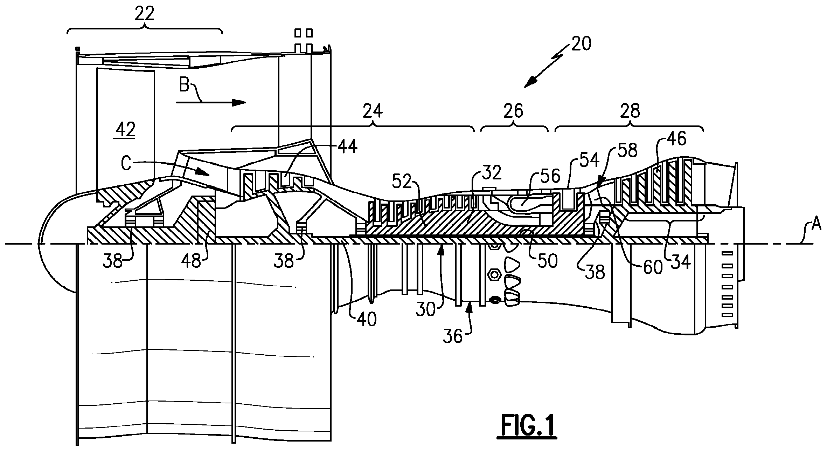

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram K) / (518.7 K)]^0.5. The "Low corrected fan tip speed" as disclosed herein according to one non-limiting embodiment is less than about 1150 ft / second (350.5 m/s).

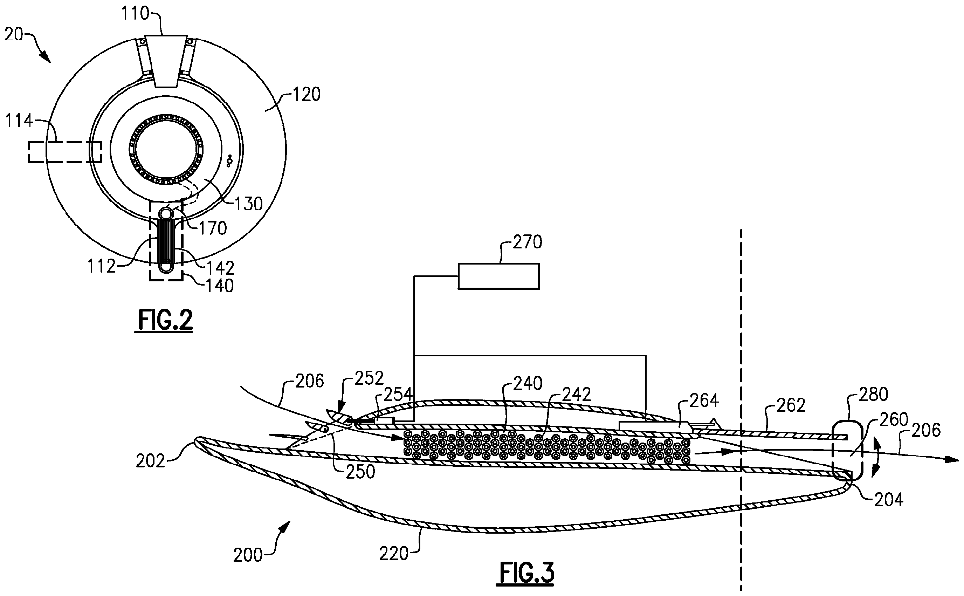

With continued reference to Figure 1, Figure 2 schematically illustrates a front view of the gas turbine engine 20. The engine core 130 is contained within a fan nacelle 120, and a fan bypass duct is defined between the fan nacelle 120 and the engine core 130. The fan nacelle 120 includes a pylon mount 110 for mounting the engine 20 to a wing of an aircraft.

In order to allow access to the engine core 130, as well as other internal components of the gas turbine engine 20, the fan nacelle 120 includes a bifurcation 112. The bifurcation 112 is approximately 180 degrees offset from the pylon mount 110 and is referred to as a lower bifurcation. Alternative engines can include additional bifurcations, or position the bifurcation at a different location. By way of example, some engines can include a bifurcation at position 114. The alternative engines can include the bifurcation in any other suitable position. The cooled cooling air is provided to one or more components in the engine 20 and actively cools the component.

During operation of the gas turbine engine 20, components, such as a last stage of the compressor section, are exposed to extreme temperatures. By way of example, the excess power draw required during take-off and ascent to cursing altitude can cause the engine 20 to generate high amounts of heat. In order to cool some sections of the engine 20, a cooled cooling air system 140 is included in the engine 20. The cooled cooling air system 140 uses one or more heat exchangers 142 to cool bleed air from the primary flowpath through the engine core 130, and provides the cooled bleed air (referred to as cooled cooling air) to components in need of cooling within the gas turbine engine 20. The cooled cooling air is used to cool the engine components according to known cooling principles. The cooled cooling air system 140 uses air drawn from the fan bypass duct as a heat sink for the cooled cooling air in the heat exchanger 142.

The heat exchanger 142 in the illustrated example of Figure 2 is disposed completely within the lower bifurcation 112. According to the invention, the heat exchanger is partially disposed in a bifurcation 112, 140, with a remainder being housed within the fan nacelle 120. The heat exchanger 142 is structurally mounted to the engine core 130 via a mechanical bracket 170, or other mechanical bracketing system.

With continued reference to Figure 2, and with like numerals indicating like elements, Figure 3 schematically illustrates a cross section of a bifurcation including a cooled cooling air system, such as the cooled cooling air system 140 of Figure 2. The cross sectional view 200 illustrates a leading edge 202 of the fan nacelle 220 through to a trailing edge 204 of the fan nacelle 220. A heat exchanger 240, which is part of the cooled cooling air system 140 is included within the bifurcation.

Upstream of the heat exchanger 240 is an inlet 250 that allows an air stream 206 into the heat sink portion of the heat exchanger 240. The air stream 206 is a portion of the air that enters the bypass fan duct. As the air stream 206 passes through the heat exchanger 240, cooling air drawn from a bleed within the engine core passes through multiple pipes 242 within the heat exchanger 240, and heat is transferred from the bleed air into the air stream 206.

The heated air within the air stream 206 is referred to as spent air, and is exhausted from the heat exchanger 240, and the cooled cooling air system, via a spent air outlet 260. In some examples the spent air outlet 260 is downstream of a fan duct nozzle into ambient atmosphere. In alternative examples, the spent air outlet can be upstream of the fan duct nozzle and is added back to the air in the fan duct prior to the fan duct air passing through the nozzle.

Each of the inlet 250 and the outlet 260 can include a flow regulation feature, such as articulating doors 252, 262. The flow regulation feature is able to control the flow of air through the inlet 252 or outlet 260, and therefore control the flow of heat sink air in the air stream 206 and through the heat exchanger 240.

In the illustrated example, each of the articulating doors 252, 262 is controllably coupled to an engine controller 270, and the engine controller 270 controls the articulation of the doors 252, 262. In such an example, the articulating doors 252, 262 can be controlled by actuators 254, 264 that are in turn controlled by the engine controller 270. Alternatively, any other means of opening and closing the doors 252, 262 can be utilized in place of the illustrated actuators 254, 264. Further, in some examples, the outlet 260 can be shaped and constricted to function as a nozzle 280 and generate thrust, such an outlet is referred to as a thrust producing nozzle. In such an example, the thrust generated by the nozzle 280 reclaims a portion of the thrust lost when air is removed from the fan bypass duct to enter the air stream 206. In alternative examples, the doors 252, 262 can be included at only the inlet 250.

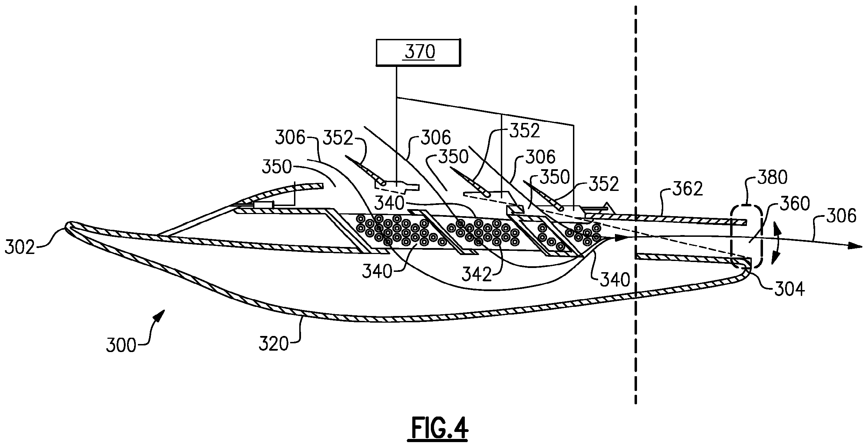

With continued reference to Figures 2 and 3, Figure 4 schematically illustrates cross sectional view 300 of an alternate fan nacelle at a bifurcation. The fan nacelle of Figure 4 is similar in construction to the fan nacelle of Figure 3, with a leading edge 302, a trailing edge 304, and a cooled cooling air system including a heat exchanger 340 positioned in the bifurcation. Unlike the example of Figure 3, however, the example of Figure 4 includes multiple heat exchangers 340, each of which includes multiple pipes 342 carrying bleed air. Each of the heat exchangers 340 includes a corresponding inlet 350 that allows air from the fan bypass duct to enter the heat exchanger as the air stream 306 and operate as the heat sink for the bleed air passing through the pipes 342. As the air stream 306 exits each of the heat exchangers 340, the airstreams are merged into a single airstream that is then passed out of an outlet 360.

As with the example of Figure 3, each of the inlets 350, and the outlet 360 include airflow regulation features, such as articulating doors 352, 362, that are capable of restricting or regulating the flow of air from the fan bypass duct into or out of the heat exchangers 340. The illustrated articulating doors 353, 363 are controlled by an engine controller 370. In some examples, each of the articulating doors at the inlets 350 can be controlled simultaneously as a single unit. In alternative examples, the controller 370 can control the articulating doors 352 independently of each other, allowing airflow through each of the heat exchangers 340 to be controlled independently of the airflow through the other heat exchangers 340.

The articulating door 362 at the outlet can be arranged to form a nozzle 380, and reclaim thrust in the same manner as the articulating door 262 illustrated in Figure 2, and described above.

In each of the above described examples, the heat exchangers 240, 340 are described and illustrated as orthogonal heat exchangers. One of skill in the art, having the benefit of this disclosure will further understand that alternative air-air heat exchangers could be utilized in place of the illustrated and described orthogonal heat exchangers 240, 340, without significant modification to the above described features.

Further, one of skill in the art having the benefit of this disclosure, will understand that multiple cooled cooling air systems can be included within a single engine, with a heat exchanger of each cooled cooling air system being included within one of the bifurcations 112, 114.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (20) comprising:
an engine core (130) defining a primary flowpath;
a fan nacelle (120; 220; 320) radially surrounding the engine core (130);
a fan bypass duct being defined between the fan nacelle (120; 220; 320) and the engine core (130);
the fan nacelle (120; 220; 320) including at least one bifurcation (112); and
a cooled cooling air system (140) including a heat exchanger (142; 240; 340),
**characterised in that**:
the heat exchanger (142; 240; 340) is disposed partially in the bifurcation (112) with a remainder being housed within the fan nacelle (120; 220; 320),
the at least one bifurcation (112) further includes a spent cooling air exhaust nozzle (260; 360),
the spent cooling air nozzle (260; 360) is a thrust producing nozzle configured to exhaust spent air from the heat exchanger (142; 240; 340), and
the cooled cooling air system (140) further includes a cooling air inlet door (252; 352) including a flow regulation feature.

2. The gas turbine engine (20) of claim 1, wherein the at least one bifurcation (112) is a lower bifurcation.

3. The gas turbine engine (20) of claim 1 or 2, wherein the heat exchanger (142; 240; 340) is structurally mounted to the engine core (130) via at least one bracket (170).

4. The gas turbine engine (20) of claim 1, 2 or 3, wherein the heat exchanger (142; 240; 340) is an air-air heat exchanger (142; 240; 340), and a cooling air stream (206; 306) originates in the fan bypass duct.

5. The gas turbine engine (20) of claim 4, wherein the cooling air stream (206; 306) exhausts into one of an aft portion of the fan bypass duct and an ambient atmosphere downstream of said fan bypass duct.

6. The gas turbine engine (20) of any preceding claim, wherein the heat exchanger (142; 240; 340) is an orthoganol heat exchanger (142; 240; 340).

7. The gas turbine engine (20) of any preceding claim, further comprising a fan (42) fore of said engine core (130), and wherein said fan (42) is connected to said engine core (130) via a gearing system (38).

8. The gas turbine engine (20) of any preceding claim, wherein said cooled cooling air system (140) includes a second heat exchanger (142; 340), and wherein said second heat exchanger (142; 340) is partially disposed in the bifurcation (112).

9. The gas turbine engine (20) of any preceding claim, wherein the cooled cooling air system (140) further includes a cooling air outlet door (262; 362) including a flow regulation feature.

10. The gas turbine engine (20) of claim 9, wherein the flow regulation feature is one of an articulating door controllably coupled to an engine controller (270; 370) such that the engine controller (270; 370) is operable to control a flow of air through said cooling air inlet (250; 350), and an articulating door coupled controllably to an engine controller (270; 370) such that the engine controller (270; 370) is operable to control a flow of air through said cooling air outlet (260; 360).

11. A method for generating cooled cooling air in a gas turbine engine (20) comprising:
withdrawing fan bypass duct air from a fan bypass duct defined between a fan nacelle (120; 220; 320) and an engine core (130), and withdrawing bleed air from a primary flowpath in the engine core (130);
providing the fan bypass air and the bleed air to a heat exchanger (142; 240; 340) in an engine bifurcation (112) via ducting;
transferring heat from said bleed air to said fan bypass air in said heat exchanger (142; 240; 340); and
providing the cooled bleed air to at least one gas turbine engine component as cooled cooling air; and
exhausting heated fan bypass duct air from said heat exchanger (142; 240; 340) into one of an aft portion of the fan bypass duct and an ambient atmosphere downstream of said fan bypass duct,
**characterised in that**:
the heat exchanger (142; 240; 340) is disposed partially in the bifurcation (112) with a remainder being housed within the fan nacelle (120; 220; 320);
exhausting said heated fan bypass duct air includes passing said heated fan bypass air through an exhaust nozzle (260; 360), thereby generating thrust, and
an inlet of the heat exchanger includes a cooling air inlet door (252; 352) including a flow regulation feature.

12. The method of claim 11, wherein transferring heat from said bleed air to said fan bypass air in said heat exchanger (142; 240; 340) comprises passing said bleed air through a plurality of pipes (242; 342) in said heat exchanger, and passing said fan bypass air across said pipes (242; 342) in said heat exchanger (142; 240; 340).

## Patentansprüche

1. Gasturbinentriebwerk (20), umfassend:
einen Triebwerkskern (130), der einen primären Strömungspfad definiert;
eine Gebläsegondel (120; 220; 320), die den Triebwerkskern (130) radial umgibt;
einen Gebläseumgehungskanal, der zwischen der Gebläsegondel (120; 220; 320) und dem Triebwerkskern (130) definiert ist;
wobei die Gebläsegondel (120; 220; 320) mindestens eine Gabelung (112) beinhaltet; und
ein gekühltes Kühlluftsystem (140), das einen Wärmetauscher (142; 240; 340) beinhaltet,
**dadurch gekennzeichnet, dass**:
der Wärmetauscher (142; 240; 340) teilweise in der Gabelung (112) angeordnet ist, wobei ein Rest in der Gebläsegondel (120; 220; 320) untergebracht ist,
die mindestens eine Gabelung (112) ferner eine Abluftdüse (260; 360) für verbrauchte Kühlluft beinhaltet,
die Düse (260; 360) für verbrauchte Kühlluft eine Schub erzeugende Düse ist, die dazu konfiguriert ist, verbrauchte Luft aus dem Wärmetauscher (142; 240; 340) auszustoßen, und
das gekühlte Kühlluftsystem (140) ferner eine Kühllufteinlasstür (252; 352) beinhaltet, die ein Strömungsregulierungsmerkmal beinhaltet.

2. Gasturbinentriebwerk (20) nach Anspruch 1, wobei die mindestens eine Gabelung (112) eine untere Gabelung ist.

3. Gasturbinentriebwerk (20) nach Anspruch 1 oder 2, wobei der Wärmetauscher (142; 240; 340) über mindestens eine Halterung (170) strukturell an dem Triebwerkskern (130) montiert ist.

4. Gasturbinentriebwerk (20) nach Anspruch 1, 2 oder 3, wobei der Wärmetauscher (142; 240; 340) ein Luft-Luft-Wärmetauscher (142; 240; 340) ist und ein Kühlluftstrom (206; 306) in dem Gebläseumgehungskanal entsteht.

5. Gasturbinentriebwerk (20) nach Anspruch 4, wobei der Kühlluftstrom (206; 306) in eines von einem hinteren Abschnitt des Gebläseumgehungskanals und einer Umgebungsatmosphäre stromabwärts des Gebläseumgehungskanals ausgestoßen wird.

6. Gasturbinentriebwerk (20) nach einem der vorhergehenden Ansprüche, wobei der Wärmetauscher (142; 240; 340) ein orthogonaler Wärmetauscher (142; 240; 340) ist.

7. Gasturbinentriebwerk (20) nach einem der vorhergehenden Ansprüche, ferner umfassend ein Gebläse (42) vor dem Triebwerkskern (130), und wobei das Gebläse (42) über ein Getriebesystem (38) mit dem Triebwerkskern (130) verbunden ist.

8. Gasturbinentriebwerk (20) nach einem der vorhergehenden Ansprüche, wobei das gekühlte Kühlluftsystem (140) einen zweiten Wärmetauscher (142; 340) beinhaltet und wobei der zweite Wärmetauscher (142; 340) teilweise in der Gabelung (112) angeordnet ist.

9. Gasturbinentriebwerk (20) nach einem der vorhergehenden Ansprüche, wobei das gekühlte Kühlluftsystem (140) ferner eine Kühlluftauslasstür (262; 362) beinhaltet, die ein Strömungsregulierungsmerkmal beinhaltet.

10. Gasturbinentriebwerk (20) nach Anspruch 9, wobei das Strömungsregulierungsmerkmal eine von einer Gelenktür, die steuerbar mit einer Triebwerkssteuerung (270; 370) derart gekoppelt ist, dass die Triebwerkssteuerung (270; 370) dazu betreibbar ist, eine Luftströmung durch den Kühllufteinlass (250; 350) zu steuern, oder einer Gelenktür ist, die steuerbar mit einer Triebwerkssteuerung (270; 370) derart gekoppelt ist, dass die Triebwerkssteuerung (270; 370) dazu betreibbar ist, eine Luftströmung durch den Kühlluftauslass (260; 360) zu steuern.

11. Verfahren zum Generieren von gekühlter Kühlluft in einem Gasturbinentriebwerk (20), umfassend:
Abziehen von Gebläseumgehungskanalluft aus einem Gebläseumgehungskanal, der zwischen einer Gebläsegondel (120; 220; 320) und einem Triebwerkskern (130) definiert ist, und Abziehen von Zapfluft aus einem primären Strömungspfad in dem Triebwerkskern (130);
Bereitstellen der Gebläserumgehungsluft und der Zapfluft an einen Wärmetauscher (142; 240; 340) in einer Triebwerksgabelung (112) über eine Leitung;
Übertragen von Wärme von der Zapfluft auf die Gebläseumgehungsluft in dem Wärmetauscher (142; 240; 340); und Bereitstellen der gekühlten Zapfluft an mindestens eine Gasturbinentriebwerkskomponente als gekühlte Kühlluft; und
Ausstoßen von erwärmter Gebläseumgehungskanalluft aus dem Wärmetauscher (142; 240; 340) in eines von einem hinteren Abschnitt des Gebläseumgehungskanals und einer Umgebungsatmosphäre stromabwärts des Gebläseumgehungskanals,
**dadurch gekennzeichnet, dass**:
der Wärmetauscher (142; 240; 340) teilweise in der Gabelung (112) angeordnet ist, wobei ein Rest in der Gebläsegondel (120; 220; 320) untergebracht ist;
das Ausstoßen der erwärmten Gebläseumgehungskanalluft Leiten der erwärmten Gebläseumgehungsluft durch eine Abluftdüse (260; 360) beinhaltet, wodurch Schub generiert wird, und
ein Einlass des Wärmetauschers eine Kühllufteinlasstür (252; 352) beinhaltet, die ein Strömungsregulierungsmerkmal beinhaltet.

12. Verfahren nach Anspruch 11, wobei das Übertragen von Wärme von der Zapfluft auf die Gebläseumgehungsluft in dem Wärmetauscher (142; 240; 340) Leiten der Zapfluft durch eine Vielzahl von Rohren (242; 342) in dem Wärmetauscher und Leiten der Gebläseumgehungsluft über die Rohre (242; 342) in dem Wärmetauscher (142; 240; 340) umfasst.

## Revendications

1. Moteur à turbine à gaz (20) comprenant :
un noyau de moteur (130) définissant un trajet d'écoulement principal ;
une nacelle de ventilateur (120 ; 220 ; 320) entourant radialement le noyau de moteur (130) ;
un conduit de dérivation de ventilateur étant défini entre la nacelle de ventilateur (120 ; 220 ; 320) et le noyau de moteur (130) ;
la nacelle de ventilateur (120 ; 220 ; 320) comportant au moins une bifurcation (112) ; et
un système d'air de refroidissement refroidi (140) comportant un échangeur de chaleur (142 ; 240 ; 340),
**caractérisé en ce que** :
l'échangeur de chaleur (142 ; 240 ; 340) est disposé partiellement dans la bifurcation (112), le reste étant logé à l'intérieur de la nacelle de ventilateur (120 ; 220 ; 320),
l'au moins une bifurcation (112) comporte en outre une buse d'échappement d'air de refroidissement usé (260 ; 360),
la buse d'air de refroidissement usé (260 ; 360) est une buse de production de poussée configurée pour évacuer l'air usé de l'échangeur de chaleur (142 ; 240 ; 340), et
le système d'air de refroidissement refroidi (140) comporte en outre une porte d'entrée d'air de refroidissement (252 ; 352) comportant un élément de régulation de débit.

2. Moteur à turbine à gaz (20) selon la revendication 1, dans lequel l'au moins une bifurcation (112) est une bifurcation inférieure.

3. Moteur à turbine à gaz (20) selon la revendication 1 ou 2, dans lequel l'échangeur de chaleur (142 ; 240 ; 340) est monté structurellement sur le noyau de moteur (130) par l'intermédiaire d'au moins un support (170).

4. Moteur à turbine à gaz (20) selon la revendication 1, 2 ou 3, dans lequel l'échangeur de chaleur (142 ; 240 ; 340) est un échangeur de chaleur air-air (142 ; 240 ; 340), et un flux d'air de refroidissement (206 ; 306) provient du conduit de dérivation de ventilateur.

5. Moteur à turbine à gaz (20) selon la revendication 4, dans lequel le flux d'air de refroidissement (206 ; 306) s'échappe dans l'une d'une partie arrière du conduit de dérivation de ventilateur et dans une atmosphère ambiante en aval dudit conduit de dérivation de ventilateur.

6. Moteur à turbine à gaz (20) selon une quelconque revendication précédente, dans lequel l'échangeur de chaleur (142 ; 240 ; 340) est un échangeur de chaleur orthoganol (142 ; 240 ; 340).

7. Moteur à turbine à gaz (20) selon une quelconque revendication précédente, comprenant en outre un ventilateur (42) à l'avant dudit noyau de moteur (130), et dans lequel ledit ventilateur (42) est relié audit noyau de moteur (130) par l'intermédiaire d'un système d'engrenage (38).

8. Moteur à turbine à gaz (20) selon une quelconque revendication précédente, dans lequel ledit système d'air de refroidissement refroidi (140) comporte un second échangeur de chaleur (142 ; 340), et dans lequel ledit second échangeur de chaleur (142 ; 340) est partiellement disposé dans la bifurcation (112).

9. Moteur à turbine à gaz (20) selon une quelconque revendication précédente, dans lequel le système d'air de refroidissement refroidi (140) comporte en outre une porte de sortie d'air de refroidissement (262 ; 362) comportant un élément de régulation de débit.

10. Moteur à turbine à gaz (20) selon la revendication 9, dans lequel l'élément de régulation de débit est l'un parmi une porte articulée couplée de manière commandée à un dispositif de commande de moteur (270 ; 370) de sorte que le dispositif de commande de moteur (270 ; 370) peut fonctionner pour commander un flux d'air à travers ladite entrée d'air de refroidissement (250 ; 350), et une porte articulée couplée de manière commandée à un dispositif de commande de moteur (270 ; 370) de sorte que le dispositif de commande de moteur (270 ; 370) peut fonctionner pour commander un flux d'air à travers ladite sortie d'air de refroidissement (260 ; 360).

11. Procédé de génération d'air de refroidissement refroidi pour un moteur à turbine à gaz (20), comprenant :
l'extraction de l'air de conduit de dérivation de ventilateur depuis un conduit de dérivation de ventilateur défini entre une nacelle de ventilateur (120 ; 220 ; 320) et un noyau de moteur (130), et l'extraction de l'air de prélèvement d'un trajet d'écoulement principal dans le noyau de moteur (130) ;
la fourniture de l'air de dérivation de ventilateur et l'air de prélèvement à un échangeur de chaleur (142 ; 240 ; 340) dans une bifurcation de moteur (112) par l'intermédiaire des conduits ;
le transfert de la chaleur dudit air de prélèvement audit air de dérivation de ventilateur dans ledit échangeur de chaleur (142 ; 240 ; 340) ; et
la fourniture de l'air de prélèvement refroidi à au moins un composant de moteur à turbine à gaz sous forme d'air de refroidissement refroidi ; et
l'évacuation de l'air chauffé de conduit de dérivation de ventilateur dudit échangeur de chaleur (142 ; 240 ; 340) dans l'une d'une partie arrière du conduit de dérivation de ventilateur et dans une atmosphère ambiante en aval dudit conduit de dérivation de ventilateur,
**caractérisé en ce que** :
l'échangeur de chaleur (142 ; 240 ; 340) est disposé partiellement dans la bifurcation (112), le reste étant logé à l'intérieur de la nacelle de ventilateur (120 ; 220 ; 320),
l'évacuation dudit air chauffé de conduit de dérivation de ventilateur comporte le passage dudit air chauffé de dérivation de ventilateur à travers une buse d'échappement (260 ; 360), générant ainsi une poussée, et
une entrée de l'échangeur de chaleur comporte une porte d'entrée d'air de refroidissement (252 ; 352) comportant un élément de régulation de débit.

12. Procédé selon la revendication 11, dans lequel le transfert de chaleur dudit air de prélèvement audit air de dérivation de ventilateur dans ledit échangeur de chaleur (142 ; 240 ; 340) comprend le passage dudit air de prélèvement à travers une pluralité de tuyaux (242 ; 342) dans ledit échangeur de chaleur, et le passage dudit air de dérivation de ventilateur à travers lesdits tuyaux (242 ; 342) dans ledit échangeur de chaleur (142 ; 240 ; 340).
